# EUROPEAN PATENT APPLICATION

(11) **EP 4 578 345 A1**
(43) Date of publication of application: **02.07.2025**
(21) Application number: 24192832.4
(22) Date of filing: 05.08.2024
(51) Int. Cl.: A47J 31/36, A47J 31/52

(54) **METHOD FOR DETERMINING CUP VOLUME AND BEVERAGE MACHINE**

(30) Priority: 31.12.2023 CN 202311867008
(71) Applicant: Kalerm Technology (Suzhou) Co., Ltd, Suzhou Jiangsu 215134 (CN)
(72) Inventor: LIU, Yonggang, Suzhou, Jiangsu, 215134 (CN); REN, Yingwei, Suzhou, Jiangsu, 215134 (CN); CHEN, Jiahai, Suzhou, Jiangsu, 215134 (CN)
(74) Representative: ABG Intellectual Property Law, S.L.

(57) **Abstract**

The present application discloses a method for determining a cup volume and a beverage machine, and the method includes: judging whether a generation process of a target object enters a constant pressure stage; when the generation process of the target object enters the constant pressure stage, obtaining a cup volume parameter corresponding to the target object; and determining, based on the cup volume parameter, a cup volume of the target object. Since the cup volume parameter represents a cup volume corresponding to one pulse signal of a flowmeter in the constant pressure stage, calculation of the cup volume of the target object is implemented based on the pulse signal in the constant pressure stage, which is not affected by air pressure fluctuation, so that the calculation of the cup volume of the target object is relatively accurate.

## Description

### FIELD OF THE INVENTION

The present application relates to the field of computer technologies, and in particular, to a method for determining a cup volume and a beverage machine.

### BACKGROUND

When an apparatus is used to make a target object necessary to be brewed with water, especially an apparatus that needs to make the target object by high-pressure brewing, a process of making the target object using such an apparatus specifically includes a pressure accumulation stage and a constant pressure stage, the pressure accumulation stage is to increase a pressure of a brewing cavity in the apparatus to a target pressure value, so as to enter the constant pressure stage, and the target object flows out of the apparatus. In this process, a water inflow amount of the apparatus includes a water supplement amount in the pressure accumulation stage and a water outlet amount in the constant pressure stage, the water supplement amount is used to increase the pressure to the target pressure value, and the water outlet amount corresponds to a target cup volume.

In related technologies, when an apparatus is used to make a target object having the target cup volume, the water supplement amount in the pressure accumulation stage is determined based on a quantity of raw materials of the target object, and in other words, the quantity of the raw materials of the target object corresponds to a fixed water supplement amount in the pressure accumulation stage. For example, when 40g of coffee is made, an output amount in the constant pressure stage is 40g, the water supplement amount in the pressure accumulation stage corresponding to a quantity of coffee powder for making 40g of coffee is 32g, and therefore, an actual total water inflow amount is 72g.

However, a pressure of pipelines in the apparatus is not constant, so that the water supplement amount in the pressure accumulation stage corresponding to the quantity of the raw materials of a same target object is also not constant, and at this time, when the quantity of the raw materials of a same target object is still processed according to a fixed water supplement amount, an influence of the pressure of the pipelines is ignored, which affects an accuracy of determining an actual cup volume.

### SUMMARY

In view of this, the present application discloses a method for determining a cup volume and a beverage machine, which is used to solve the problems of inaccurate cup volume determination caused by an inconstant pressure of pipelines in a pressure accumulation stage.

In one aspect, the present application provides a method for determining a cup volume, including:
judging whether a generation process of a target object enters a constant pressure stage;
when the generation process of the target object enters the constant pressure stage, obtaining a cup volume parameter corresponding to the target object, the cup volume parameter representing a cup volume corresponding to one pulse signal of a flowmeter in the constant pressure stage; and
determining, based on the cup volume parameter, a cup volume of the target object.

In a possible embodiment, the obtaining a cup volume parameter corresponding to the target object includes:
calculating a ratio of an actual cup volume of the target object to a target cup volume generated in the constant pressure stage; and
multiplying the ratio by a preset parameter to obtain the cup volume parameter, the preset parameter representing a cup volume corresponding to one pulse signal of the flowmeter.

In a possible embodiment, the judging whether a generation process of a target object enters a constant pressure stage includes:
obtaining a pulse signal of the flowmeter corresponding to the generation process; and
judging whether the generation process of the target object enters the constant pressure stage based on the pulse signal of the flowmeter.

In a possible embodiment, the judging whether the generation process of the target object enters the constant pressure stage based on the pulse signal of the flowmeter includes:
determining a current pulse signal period corresponding to the pulse signal of the flowmeter; and
when the current pulse signal period satisfies a preset condition, determining that the generation process of the target object enters the constant pressure stage.

In a possible embodiment, when the current pulse signal period satisfies the preset condition, the determining that the generation process of the target object enters the constant pressure stage includes:
determining a maximum pulse period based on a size relationship between the current pulse signal period and a previous pulse signal period, when the current pulse signal period is greater than the previous pulse signal period, determining the current pulse signal period as the maximum pulse period, when the current pulse signal period is less than the previous pulse signal period, determining the previous pulse signal period as the maximum pulse period, the previous pulse signal period being a maximum pulse period determined based on a pulse signal of the flowmeter obtained previously; and
determining that the generation process of the target object enters the constant pressure stage based on the maximum pulse period.

In a possible embodiment, the determining that the generation process of the target object enters the constant pressure stage based on the maximum pulse period includes:
when the maximum pulse period is greater than a preset period, adjusting at least one parameter; and
when one of at least one adjusted parameter is greater than or equal to a preset threshold set for a corresponding parameter, determining that the generation process of the target object enters the constant pressure stage.

In a possible embodiment, the determining that the generation process of the target object enters the constant pressure stage based on the maximum pulse period includes:
when the maximum pulse period is greater than a first preset value, adjusting a first parameter, a second parameter and a third parameter, the first parameter, the second parameter and the third parameter representing a cumulative number of pulse signals obtained currently; and
when an adjusted first parameter is greater than or equal to a first threshold, or an adjusted second parameter is greater than or equal to a second threshold, or an adjusted third parameter is greater than or equal to a third threshold, determining that the generation process of the target object enters the constant pressure stage.

In a possible embodiment, the determining that the generation process of the target object enters the constant pressure stage based on the maximum pulse period includes:
when the maximum pulse period is less than or equal to the first preset value, judging whether the maximum pulse period is greater than a second preset value, the second preset value being less than the first preset value;
when the maximum pulse period is greater than the second preset value, adjusting the second parameter and the third parameter; and
when the first parameter is greater than or equal to the first threshold, or an adjusted second parameter is greater than or equal to the second threshold, or an adjusted third parameter is greater than or equal to the third threshold, determining that the generation process of the target object entered the constant pressure stage.

In a possible embodiment, the determining that the generation process of the target object enters the constant pressure stage based on the maximum pulse period includes:
when the maximum pulse period is less than or equal to the second preset value, judging whether the maximum pulse period is greater than a third preset value, the third preset value being less than the second preset value;
when the maximum pulse period is greater than the third preset value, adjusting the third parameter; and
when the first parameter is greater than or equal to the first threshold, or the second parameter is greater than or equal to the second threshold, or an adjusted third parameter is greater than or equal to the third threshold, determining that the generation process of the target object entered the constant pressure stage.

In a possible embodiment, when the maximum pulse period is greater than the second preset value, the adjusting the second parameter and the third parameter includes: when the maximum pulse period is greater than the second preset value and is greater than an iteration parameter, adjusting the second parameter and the third parameter; and when the maximum pulse period is greater than the third preset value, the adjusting the third parameter includes: when the maximum pulse period is greater than the third preset value and is greater than the iteration parameter, adjusting the third parameter.

In a possible embodiment, the method further includes:
updating the iteration parameter based on the maximum pulse period.

In a possible embodiment, the determining, based on the cup volume parameter, a cup volume of the target object includes:
collecting statistics on a number of pulse signals of the flowmeter in the constant pressure stage; and
multiplying the cup volume parameter by the number of the pulse signals to obtain the cup volume of the target object.

In one aspect, an embodiment of the present application provides a beverage machine, including a water supply system, a flowmeter, a brewing system and a control module;
the brewing system is configured to gradually pressurize a brewing object until it is determined to enter a constant pressure stage and form a beverage; and
the control module is configured to judge whether a generation process of the beverage enters the constant pressure stage; obtain a cup volume parameter when the generation process of the beverage enters the constant pressure stage, the cup volume parameter representing a cup volume corresponding to one pulse signal of the flowmeter in the constant pressure stage; and determine, based on the cup volume parameter, a cup volume of the beverage.

In a possible embodiment, the control module includes a judging unit, an obtaining unit and a calculation unit, and
the judging unit is configured to judge whether the generation process of the beverage enters the constant pressure stage based on a pulse signal of the flowmeter corresponding to the generation process;
the obtaining unit is configured to obtain the cup volume parameter in the constant pressure stage and pulse signals of the flowmeter;
the calculation unit is configured to determine, based on the cup volume parameter, the cup volume of the beverage; and
the calculation unit is further configured to:
   calculate a ratio of an actual cup volume of the beverage to a target cup volume generated in the constant pressure stage; and
   multiply the ratio by a preset parameter to obtain the cup volume parameter, the preset parameter representing a cup volume corresponding to one pulse signal of the flowmeter.

In a possible embodiment, the control module further includes a storage unit, and the storage unit is configured to store the cup volume parameter in the constant pressure stage; the calculation unit is configured to calculate, based on the cup volume parameter and the target cup volume generated in the constant pressure stage, a number of pulse signals of the flowmeter required for the constant pressure stage; and multiply the cup volume parameter by the number of the pulse signals to obtain the cup volume of the beverage, after the pulse signals of the flowmeter required for the constant pressure stage are obtained.

The beneficial effects of the present application are as follows.

Embodiments of the present application provide a method for determining a cup volume and a beverage machine, whether a generation process of a target object enters a constant pressure stage is determined, when the generation process of the target object enters the constant pressure stage is determined, a cup volume parameter is obtained, the cup volume parameter represents a cup volume corresponding to one pulse signal of a flowmeter in the constant pressure stage, and then a cup volume of the target object is determined based on the cup volume parameter. Since the cup volume parameter represents the cup volume corresponding to the one pulse signal of the flowmeter in the constant pressure stage, calculation of the cup volume of the target object is implemented based on the pulse signal in the constant pressure stage, which is not affected by air pressure fluctuation, so that the calculation of the cup volume of the target object is relatively accurate.

Other features and advantages of the present application may be set forth in the following specification, and may be partly apparent from the specification, or may be learned by implementing the present application. The purposes and other advantages of the present application may be realized and obtained by structures particularly pointed out in the written specification, the claims and the accompanying drawings.

### BRIEF DESCRIPTION OF THE DRAWINGS

In order to more clearly illustrate the technical solutions in embodiments of the present application or related technologies, the following provides a brief introduction to the accompanying drawings required in the embodiments or the related technologies. Obviously, the accompanying drawings in the following description are only for the embodiments of the present application. For a person skilled in the art, other accompanying drawings may be obtained based on the provided accompanying drawings without creative efforts.
FIG. 1 is a schematic diagram of an application scenario according to an embodiment of the present application.
FIG. 2 is a schematic diagram of another application scenario according to an embodiment of the present application.
FIG. 3 is a flowchart of an implementation of a method for determining a cup volume according to an embodiment of the present application.
FIG. 4A is a schematic diagram of a pressure curve of a generation process of a target object according to an embodiment of the present application.
FIG. 4B is a schematic diagram of a pulse signal period of a flowmeter according to an embodiment of the present application.
FIG. 5 is a flowchart of an implementation of a method for determining a constant pressure stage according to an embodiment of the present application.
FIG. 6 is a flowchart of an implementation of another method for determining a constant pressure stage according to an embodiment of the present application.
FIG. 7 is a flowchart of an implementation of another method for determining a constant pressure stage according to an embodiment of the present application.
FIG. 8 is a schematic diagram of a method for determining a coffee cup volume according to an embodiment of the present application.
FIG. 9 is a schematic structural diagram of a control module according to an embodiment of the present application.
FIG. 10 is a schematic structural diagram of an electronic apparatus according to an embodiment of the present application.

### DETAILED DESCRIPTIONS OF THE EMBODIMENTS

In order to make the purposes, technical solutions, and advantages of the present application clearer, the present application may be further described in detail below with reference to the accompanying drawings. It should be noted that in the description of the present application, "a plurality of" is understood as "at least two". "And/Or" describes an association relationship between associated objects, indicating that there may be three relationships, for example, A and/or B may indicate that A exists alone, A and B exist simultaneously, and B exists alone. A being connected to B may indicate that A and B are directly connected, and A and B are connected through C. In addition, in the description of the present application, terms such as "first" and "second" are only used for distinguishing purposes of descriptions, and cannot be understood as indicating or implying relative importance, nor can be understood as indicating or implying a sequence.

It should be noted that specific details are set forth in the following description to fully understand the present application. However, the present application may be implemented in a variety of other ways different from those described herein, and a person skilled in the art may make similar promotion without departing from the connotation of the present application. Therefore, the present application is not limited by the specific embodiments disclosed below. The following description in the specification is preferred embodiments for implementing the present application, and the description is intended to illustrate the general principles of the present application and is not intended to limit the scope of the present application. The scope of protection of the present application is defined by the appended claims.

### Overview

The design ideas of the embodiments of the present application may be introduced briefly below.

When an apparatus is used to make a target object necessary to be brewed with water, especially an apparatus that needs to make the target object by high-pressure brewing, a process of making the target object using such an apparatus specifically includes a pressure accumulation stage and a constant pressure stage, the pressure accumulation stage is to increase a pressure of a brewing cavity in the apparatus to a target pressure value, so as to enter the constant pressure stage, and the target object flows out of the apparatus. In this process, a water inflow amount of the apparatus includes a water supplement amount in the pressure accumulation stage and a water outlet amount in the constant pressure stage, the water supply amount is used to increase the pressure to the target pressure value, and the water outlet amount corresponds to a target cup volume.

In related technologies, when an apparatus is used to make a target object having the target cup volume, the water supplement amount in the pressure accumulation stage is determined based on a quantity of raw materials of the target object, and in other words, the quantity of the raw materials of the target object corresponds to a fixed water supplement amount in the pressure accumulation stage. For example, when 40g of coffee is made, an output amount in the constant pressure stage is 40g, the water supplement amount in the pressure accumulation stage corresponding to a quantity of coffee powder for making 40g of coffee is 32g, and therefore, an actual total water inflow amount is 72g.

However, a pressure of pipelines in the apparatus is not constant, so that the water supplement amount in the pressure accumulation stage corresponding to the quantity of the raw materials of a same target object is also not constant, and at this time, when the quantity of the raw materials of a same target object is still processed according to a fixed water supplement amount, an influence of the pressure of the pipelines is ignored, which affects an accuracy of determining an actual cup volume.

In view of this, embodiments of the present application provide a method for determining a cup volume, a beverage machine and an electronic apparatus, whether a generation process of a target object enters a constant pressure stage is judged, when the generation process of the target object enters the constant pressure stage, a cup volume parameter is obtained, the cup volume parameter represents a cup volume corresponding to one pulse signal of a flowmeter in the constant pressure stage, and then a cup volume of the target object is determined based on the cup volume parameter. Since the cup volume parameter represents the cup volume corresponding to the one pulse signal of the flowmeter in the constant pressure stage, calculation of the cup volume of the target object is implemented based on the pulse signal in the constant pressure stage, which is not affected by air pressure fluctuation, so that the calculation of the cup volume of the target object is relatively accurate.

Preferred embodiments of the present application are described below with reference to the accompanying drawings, it should be understood that the preferred embodiments described herein are only used to illustrate and explain the present application, and are not intended to limit the present application, and without conflict, the embodiments of the present application and the features in the embodiments may be combined with each other.

### Exemplary Application Scenario

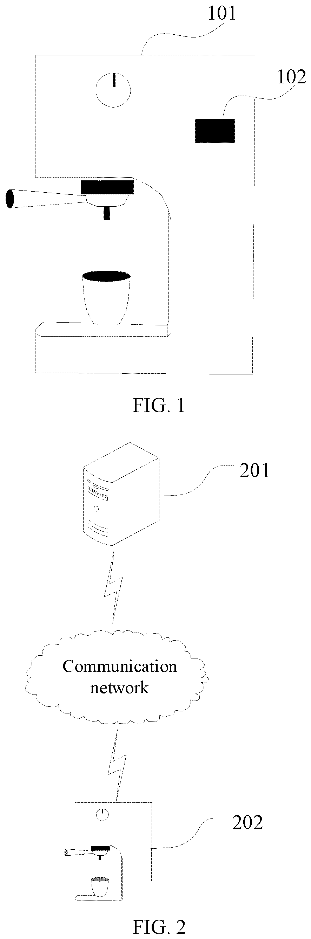

FIG. 1 is a schematic diagram of an application scenario according to an embodiment of the present application, the application scenario includes an apparatus 101 for making a target object, and a processor 102 disposed inside the apparatus 101; when the target object is coffee, the apparatus 101 is a coffee machine, and when the target object is tea, the apparatus 101 may be a teapresso machine; and the processor 102 judges whether a generation process of the target object enters a constant pressure stage, when the generation process of the target object is determined to enter the constant pressure stage, the processor 102 obtains a cup volume parameter of the target object from the apparatus 101, and the processor 102 determines, based on the cup volume parameter, a cup volume of the target object.

It should be understood that the cup volume of the target object does not refer to a volume of a cup, but rather to a volume of the target object (such as coffee liquid) being made, i.e., a volume of a space occupied by the coffee liquid in the cup after the coffee liquid enters the cup. Therefore, the cup volume of the target object is also a cup volume generated by the target object.

FIG. 2 is a schematic diagram of an application scenario according to an embodiment of the present application, the application scenario includes a server 201 and a terminal apparatus 202, and the server 201 and the terminal apparatus 202 are connected by a communication network. Of course, the communication network may be a wired network or a wireless network.

The server 201 may be an independent physical server, or may also be an edge apparatus in the field of cloud computing, or may also be a cloud server that provides basic cloud computing services such as a cloud service, a cloud database, cloud computing, a cloud storage, a cloud function, a network service, a cloud communication, a middleware service, a domain name service, a security service, a content delivery network (CDN), and a big data and artificial intelligence platform; and the terminal apparatus 202 is an apparatus for making a target object, for example, a coffee machine, or a teapresso machine, etc. The terminal apparatus 202 may be installed with a client related to determination of a cup volume, and the client may be a software (for example, an APP, a browser, or a short video software, etc.), or may also be a webpage, or an applet, etc. Auser of the terminal apparatus 202 may use the client for human-computer interaction through the terminal apparatus 202.

It should be noted that a method for determining a cup volume in the embodiments of the present application may be independently performed by the server 201 or the terminal apparatus 202, or may be jointly performed by the terminal apparatus 202 and the server 201. For example, when the method is jointly performed by the server 201 and the terminal apparatus 202, the server 201 judges whether a generation process of the target object enters a constant pressure stage, and then the server 201 instructs the terminal apparatus 202 to obtain a cup volume parameter corresponding to the target object when determining that the generation process of the target object enters the constant pressure stage, and the cup volume parameter represents a cup volume corresponding to one pulse signal of a flowmeter; when acquiring the cup volume parameter corresponding to the target object, the terminal apparatus 202 transmits the cup volume parameter to the server 201; and the server 201 determines, based on the cup volume parameter, a cup volume of the target object.

### Exemplary Method

In combination with the above system architectures, a method for determining a cup volume provided in the exemplary embodiments of the present application may be described below with reference to the accompanying drawings, it should be noted that the above system architectures are only shown for the convenience of understanding the spirit and principles of the present application, and the embodiments of the present application are not limited in this respect.

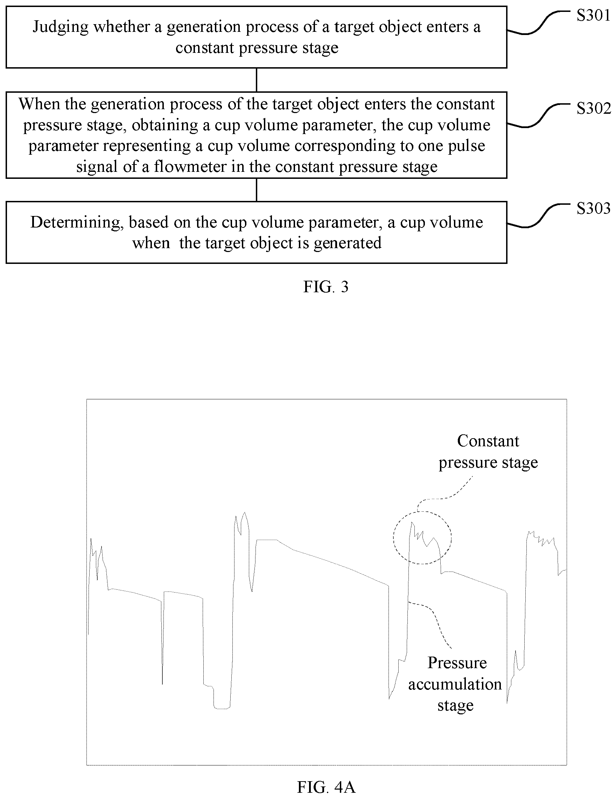

FIG. 3 is a flowchart of an implementation of a method for determining a cup volume according to an embodiment of the present application, which is introduced with the processor shown in FIG. 1 as an execution subject, and a specific implementation process of the method is as follows:
S301, judging whether a generation process of a target object enters a constant pressure stage;
S302, when the generation process of the target object enters the constant pressure stage, obtaining a cup volume parameter, the cup volume parameter representing a cup volume corresponding to one pulse signal of a flowmeter in the constant pressure stage; and
S303, determining, based on the cup volume parameter, a cup volume of the target object.

In the embodiments of the present application, whether the generation process of the target object enters the constant pressure stage is judged, when the generation process of the target object is determined to enter the constant pressure stage, the cup volume parameter is obtained, the cup volume parameter represents the cup volume corresponding to the one pulse signal of the flowmeter in the constant pressure stage, and then the cup volume of the target object is determined based on the cup volume parameter. Since the cup volume parameter represents the cup volume corresponding to the one pulse signal of the flowmeter in the constant pressure stage, calculation of the cup volume of the target object is implemented based on the pulse signal in the constant pressure stage, which is not affected by air pressure fluctuation, so that the calculation of the cup volume of the target object is relatively accurate.

Based on this, obtaining the cup volume parameter is one of the key points of the embodiments of the present application, and a specific manner to obtain the cup volume parameter may be: calculating a ratio of an actual cup volume of the target object to a target cup volume generated in the constant pressure stage; and multiplying the ratio by a preset parameter to obtain the cup volume parameter, and the preset parameter representing a cup volume corresponding to one pulse signal of the flowmeter.

For example, when coffee is made by a coffee machine, a K value (the preset parameter) is set for the coffee machine, which is specifically equal to 0.1. Then, coffee having the target cup volume of 150g is made by the coffee machine, but the actual cup volume of the obtained coffee is 120g, a value of the cup volume parameter is further obtained to be equal to 120/150*0.1 = 0.08, and the value is input into the coffee machine.

In this way, the cup volume parameter is obtained by the ratio of the actual cup volume to the target cup volume generated in the constant pressure stage, so that a determination process of the cup volume of the target object may be converted into the constant pressure stage through the cup volume parameter, which is not affected by air pressure fluctuation.

It should be noted that, in a possible embodiment, the cup volume parameter corresponding to the target object is first obtained, then whether the generation process of the target object enters the constant pressure stage is judged, and when the generation process of the target object enters the constant pressure stage, the cup volume of the target object is determined based on the cup volume parameter.

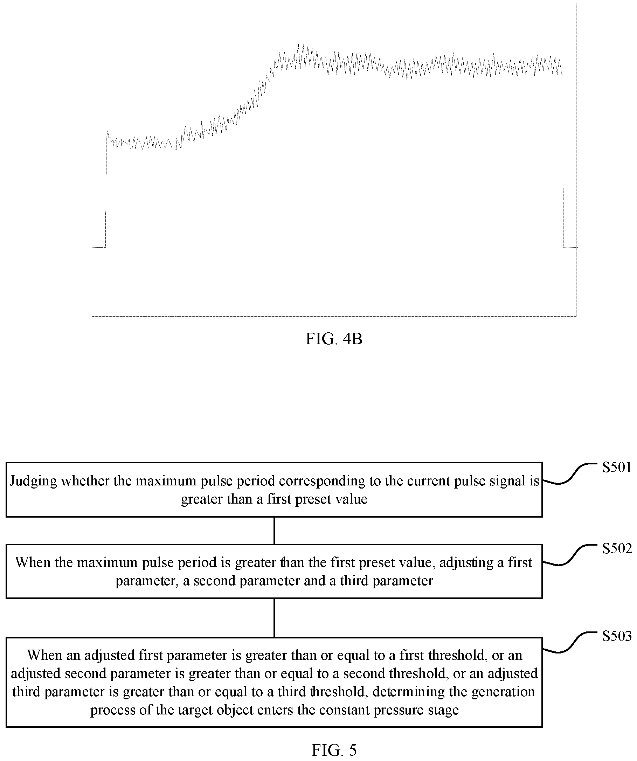

Consider that when the target object is made by an apparatus, such as coffee, an external water source generally first passes through the flowmeter, then the external water source enters a water pump and a boiler, and finally the external water source flows out through a brewer. In this process, in order to enable the brewer to flow out of the coffee, a pressure of a brewing cavity inside the brewer generally needs to reach a target pressure value, and the target pressure value is determined according to a type and model of the apparatus. For example, the target pressure value corresponding to a coffee machine is generally 7bar, but the target pressure values of different coffee machines are also different. Before the target object flows out of the brewer, it is necessary to use the water pump to pump water for pressure accumulation, until the pressure of the brewing cavity inside the brewer rises to 7bar, so that the coffee can normally flow out of the brewer. In a pressure accumulation stage, a pressure of pipelines inside the whole apparatus is in a fluctuating state. FIG. 4A shows a pressure curve change of the generation process of the target object, FIG. 4B is a diagram of a pulse signal period of the flowmeter, a dense stage in FIG. 4A is the constant pressure stage, and an overall trend obtained after the curve corresponding to the dense stage is stretched is basically similar to that of FIG. 4B.

Based on this, judging whether the generation process of the target object enters the constant pressure stage may be implemented based on the pulse signal of the flowmeter, so that a pressure sensor does not need to be added, saving a cost. Firstly, a pulse signal of the flowmeter corresponding to the generation process of the target object is obtained; then, whether the generation process of the target object enters the constant pressure stage is judged based on the pulse signal of the flowmeter, and specifically, a current pulse signal period corresponding to the pulse signal of the flowmeter is determined; then, when the current pulse signal period satisfies a preset condition, the generation process of the target object is determined to enter the constant pressure stage, which includes:
when the current pulse signal period is greater than a previous pulse signal period, determining the current pulse signal period as a maximum pulse period, and the previous pulse signal period being a maximum pulse period determined based on a pulse signal of the flowmeter obtained previously; or when the current pulse signal period is less than a previous pulse signal period, determining the previous pulse signal period as a maximum pulse period; and determining that the generation process of the target object enters the constant pressure stage based on the maximum pulse period.

When the current pulse signal period is less than the previous pulse signal period, the previous pulse signal period is still determined as the maximum pulse period, which is because a pulse signal period with a maximum value has already appeared in pulse signal periods, and the pulse signal period with the maximum value represents a period close to a maximum pressure, other pulse signal periods with other relatively low values appearing later are likely to be pulse signal periods in the constant pressure stage, and therefore, only considering the maximum pulse period makes judgement relatively accurate.

It should be understood that, pulse signal periods of the flowmeter in the pressure accumulation stage are in an increasing trend, and when the pulse signal period with the maximum value is determined by a change curve of the pulse signal periods corresponding to pulse signals of the flowmeter, it is considered that the generation process of the target object is in the constant pressure stage; otherwise, when it is determined that the pulse signal period with the maximum value is not appeared in the pulse signal periods and the pulse signal periods are still in the increasing trend through the change curve of the pulse signal periods corresponding to the pulse signals of the flowmeter, it is preliminarily considered that the generation process of the target object is in the pressure accumulation stage, and at this time, it is further determined whether the generation process of the target object enters the constant pressure stage based on the maximum pulse period, and the specific determination method includes:
when the maximum pulse period is greater than a preset period, adjusting at least one parameter; and
when one of at least one adjusted parameter is greater than or equal to a preset threshold set for a corresponding parameter, determining that the generation process of the target object enters the constant pressure stage.

In this way, when the obtained maximum pulse period reaches the preset period, it is not directly judged that the generation process of the target object enters the constant pressure stage, but subsequent pulse signals are continuously obtained by the at least one parameter, so as to improve an accuracy of judgment for the constant pressure stage.

Exemplarily, referring to FIG. 5, FIG. 5 shows a method for determining the constant pressure stage according to an embodiment of the present application, the specific implementation of the method includes the following steps.

S501, judging whether the maximum pulse period corresponding to the current pulse signal is greater than a first preset value.

Before the maximum pulse period of the current pulse signal is determined, the obtained pulse signal is filtered first to remove abnormal data.

Further, whether the maximum pulse period is greater than the first preset value is judged, the first preset value is determined according to a type of an apparatus and a signal type, a unit of a pulse signal period in the present application is millisecond (ms), the unit is omitted when the pulse signal period is subsequently described, and the pulse signal period may be taken as a value of 120, 119, or 118, etc., which is not specifically limited herein. The specific value is mainly based on a difference between pipelines in the apparatus, if a pressure of the pipelines in the apparatus is relatively large, the value is relatively large, and if the pressure of the pipelines in the apparatus is relatively small, the value is relatively small. The first preset value represents a preset maximum pulse period, and when the pulse signal period with the maximum value has already appeared in the pulse signal periods of the flowmeter, it may be considered that a subsequent stage is the constant pressure stage. Therefore, when the maximum pulse period corresponding to the current pulse signal is greater than the first preset value, it may be considered that the current generation process of the target object is close to the constant pressure stage. Specifically, whether the current generation process of the target object enters the constant pressure stage is judged by obtaining the subsequent pulse signals.

S502, when the maximum pulse period is greater than the first preset value, adjusting a first parameter, a second parameter and a third parameter.

The first parameter, the second parameter and the third parameter represent a cumulative number of pulse signals obtained currently; and when the first parameter, the second parameter and the third parameter are adjusted, a set value may be added to a value of the first parameter, a value of the second parameter and a value of the third parameter, respectively, for example, adding 1. In the embodiments of the present application, a manner for adjusting the first parameter, the second parameter and the third parameter is not specifically limited.

S503, when an adjusted first parameter is greater than or equal to a first threshold, or an adjusted second parameter is greater than or equal to a second threshold, or an adjusted third parameter is greater than or equal to a third threshold, determining that the generation process of the target object enters the constant pressure stage.

The first threshold, the second threshold and the third threshold represent a preset number of pulse signals. A value of the first threshold may be equal to 6, and of course, the value of the first threshold may also be equal to the value such as 5 or 7; a value of the second threshold may be equal to 12, and of course, the value of the second threshold may also be equal to the value such as 11 or 13; and a value of the third threshold may be equal to 18, and of course, the value of the third threshold may also be equal to the value such as 17 or 19. The values of the first threshold, the second threshold and the third threshold are not specifically limited herein.

When it is determined that the adjusted first parameter is greater than or equal to the first threshold, or the adjusted second parameter is greater than or equal to the second threshold, or the adjusted third parameter is greater than or equal to the third threshold, the generation process of the target object is determined to enter the constant pressure stage. In this way, after it is judged that the generation process of the target object is close to the constant pressure stage, the subsequent pulse signals are continuously obtained through the first parameter, the second parameter or the third parameter, so as to improve an accuracy of judgment for the constant pressure stage.

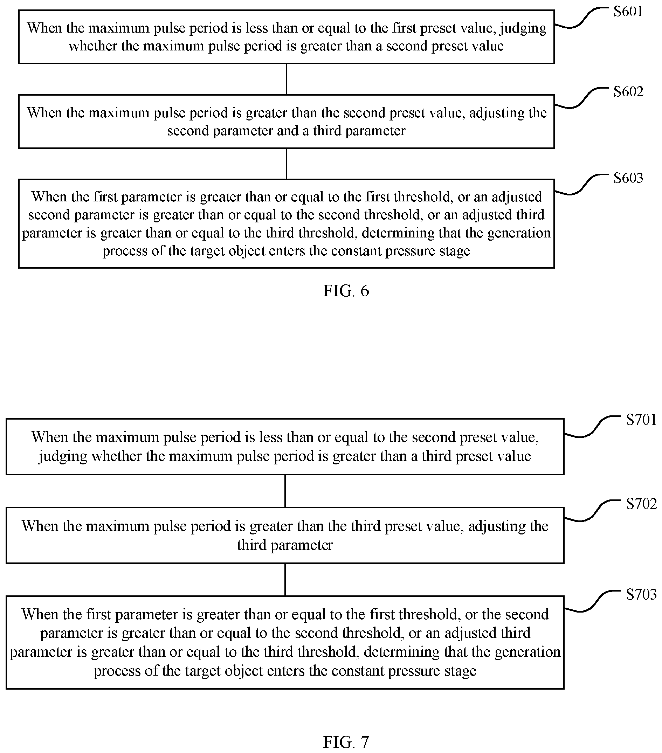

In a possible embodiment, referring to FIG. 6, FIG. 6 shows a method for determining the constant pressure stage according to an embodiment of the present application, and a specific implementation process includes the following steps.

S601, when the maximum pulse period is less than or equal to the first preset value, judging whether the maximum pulse period is greater than a second preset value.

The second preset value is less than the first preset value, and the second preset value is determined according to a type of the apparatus and a signal type, the second preset value may be equal to 110, 109 or 108, etc., which is not specifically limited herein, and the specific value is mainly based on a difference between pipelines in the apparatus, if a pressure of the pipelines in the apparatus is relatively large, the value is relatively large, and if the pressure of the pipelines in the apparatus is relatively small, the value is relatively small. The second preset value also represents a preset maximum pulse period, and when the pulse signal period with the maximum value has already appeared in the pulse signal periods of the flowmeter, it may be considered that the subsequent stage is the constant pressure stage. Therefore, when the maximum pulse period corresponding to the current pulse signal is greater than the second preset value, it may be considered that the current generation process of the target object is close to the constant pressure stage. Specifically, whether the current generation process of the target object enters the constant pressure stage is judged by obtaining the subsequent pulse signals.

It should be noted that, when whether the maximum pulse period is greater than the second preset value is judged, another judging step may be further added: judging whether the maximum pulse period is greater than an iteration parameter Hmax, and the essence of step S601 is to judge whether the maximum pulse period is greater than the second preset value and is greater than the iteration parameter when the maximum pulse period is less than or equal to the first preset value.

After each judgment of entering the constant pressure stage, the iteration parameter Hmax is updated, a value of the iteration parameter Hmax is determined by the maximum pulse period of the target object generated last time, and the specific calculation method is Hmax = (Tmax-X)/10* 10, a value of the X is equal to 20, of course, the value of the X may also be 1 equal to 8 or 19, etc., which is not specifically limited herein, and the Tmax is the maximum pulse period. When the target object is generated by the apparatus for a first time, a default value of the Hmax may be equal to a preset pulse signal period with a minimum value in a plurality of preset pulse signal periods. For example, when there are only two preset maximum pulse periods consisting of the first preset value and the second preset value, the default value of the Hmax is equal to the second preset value; and when there is another preset value less than the second preset value, the default value of the Hmax is equal to the another preset value. After each time the target object is generated and the water pump is turned off, the iteration parameter Hmax involves in numerical iteration. Certainly, the default value of the Hmax may also be less than the preset pulse signal period with the minimum value in the plurality of preset pulse signal periods, which is not specifically limited herein.

The value of the iteration parameter Hmax is continuously updated, which not only reduces the judgment step, but also makes the value of the Hmax continuously close to a pulse signal period under an actual maximum pressure, i.e., closer to the pulse signal period in the constant pressure stage, so that the cup volume is calculated relatively accurately.

S602, when the maximum pulse period is greater than the second preset value, adjusting the second parameter and the third parameter.

When it is determined that the maximum pulse period is greater than the second preset value (if the iteration parameter is considered, it may also be determined that the maximum pulse period is greater than the iteration parameter), the second parameter and the third parameter are adjusted. The specific adjustment manner may be to add a set value to the value of the second parameter and the value of the third parameter, respectively, for example, adding 1. In the embodiments of the present application, a manner for adjusting the second parameter and the third parameter is not specifically limited.

S603, when the first parameter is greater than or equal to the first threshold, or an adjusted second parameter is greater than or equal to the second threshold, or an adjusted third parameter is greater than or equal to the third threshold, determining that the generation process of the target object enters the constant pressure stage.

When it is determined that the first parameter is greater than or equal to the first threshold, or the adjusted second parameter is greater than or equal to the second threshold, or the adjusted third parameter is greater than or equal to the third threshold, the generation process of the target object is determined to enters the constant pressure stage. In this way, after it is determined that the generation process of the target object is close to the constant pressure stage, the subsequent pulse signals are continuously obtained through the first parameter, the second parameter or the third parameter, so as to improve an accuracy of judgment for the constant pressure stage.

In a possible embodiment, referring to FIG. 7, FIG. 7 shows a method for determining the constant pressure stage according to an embodiment of the present application, and a specific implementation process includes the following steps.

S701, when the maximum pulse period is less than or equal to the second preset value, judging whether the maximum pulse period is greater than a third preset value.

The third preset value is less than the second preset value, and the third preset value is determined according to a type of the apparatus and a signal type, the third preset value may be equal to 100, 99 or 98, etc., which is not specifically limited herein, and the specific value is mainly based on a difference between pipelines in the apparatus, if a pressure of the pipelines in the apparatus is relatively large, the value is relatively large, and if the pressure of the pipelines in the apparatus is relatively small, the value is relatively small. The third preset value also represents a preset maximum pulse period, and when a pulse signal period with a maximum value has already appeared in the pulse signal periods of the flowmeter, it may be considered that the subsequent stage is the constant pressure stage. Therefore, when the maximum pulse period corresponding to the current pulse signal is greater than the third preset value, it may be considered that the current generation process of the target object is close to the constant pressure stage. Specifically, whether the current generation process of the target object enters the constant pressure stage is judged, and the subsequent pulse signals are also obtained.

It should be noted that, when whether the maximum pulse period is greater than the third preset value is judged, another judging step may be further added: determining whether the maximum pulse period is greater than an iteration parameter, and the essence of step S701 is to determine whether the maximum pulse period is greater than the third preset value and is greater than the iteration parameter when the maximum pulse period is less than or equal to the second preset value.

S702, when the maximum pulse period is greater than the third preset value, adjusting the third parameter.

When it is determined that the maximum pulse period is greater than the third preset value (if the iteration parameter is considered, it may also be determined that the maximum pulse period is greater than the iteration parameter), the third parameter is adjusted. The specific adjustment manner may be to add a set value to the value of the third parameter, for example, adding 1. In the embodiments of the present application, a manner for adjusting the third parameter is not specifically limited.

S703, when the first parameter is greater than or equal to the first threshold, or the second parameter is greater than or equal to the second threshold, or an adjusted third parameter is greater than or equal to the third threshold, determining that the generation process of the target object enters the constant pressure stage.

When it is determined that the first parameter is greater than or equal to the first threshold, or the second parameter is greater than or equal to the second threshold, or the adjusted third parameter is greater than or equal to the third threshold, the generation process of the target object is determined to enter the constant pressure stage. In this way, after it is determined that the generation process of the target object is close to the constant pressure stage, the subsequent pulse signals are continuously obtained through the first parameter, the second parameter or the third parameter, so as to improve an accuracy of judgment for the constant pressure stage.

After the generation process of the target object is determined to enter the constant pressure stage through the foregoing manners, step S303 is further performed, i.e., determining, based on the cup volume parameter, a cup volume of the target object, and the specific determination method may be: collecting statistics on a number of pulse signals of the flowmeter in the constant pressure stage; and multiplying the cup volume parameter by the number of the pulse signals to obtain the cup volume of the target object.

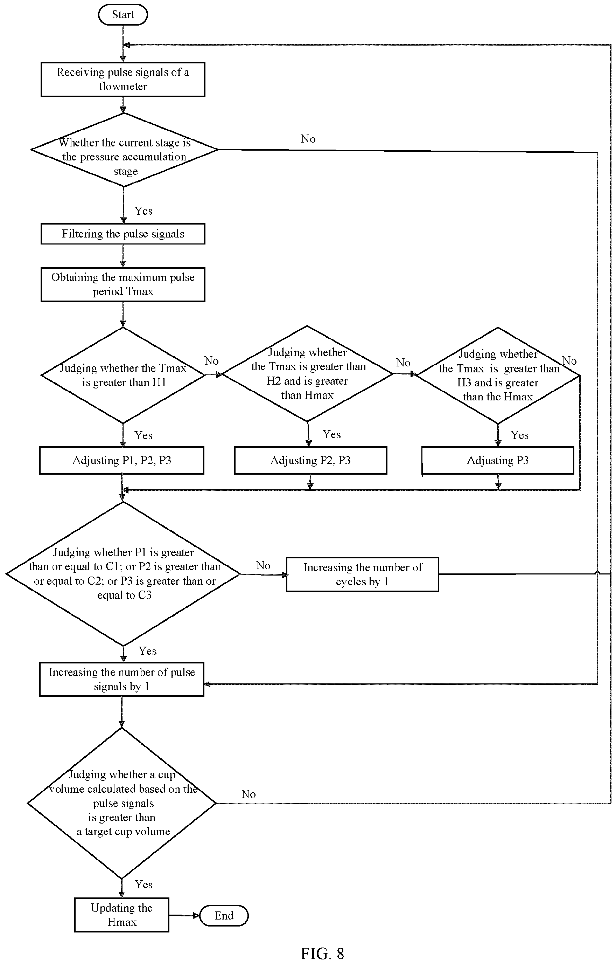

In order to describe the above technical solutions in more detail, a specific scenario for making coffee may be described below. FIG. 8 is a schematic diagram of a method for determining a coffee cup volume.

In FIG. 8, the first preset value H1 is equal to 120, the second preset value H2 is equal to 110, the third preset value H3 is equal to 100, a value of the first threshold C1 is equal to 6, a value of the second threshold C2 is equal to 12, a value of the third threshold C3 is equal to 18, and the default value of the iteration parameter Hmax is equal to 100. The above values are all preset values of a coffee machine, and due to differences in machines, the preset values are also different for each coffee machine.

When the coffee cup volume is determined, the pulse signals of the flowmeter are collected firstly, and then whether the current stage is the pressure accumulation stage is judged based on a change trend of the pulse signal periods. When it is judged that the current stage is the pressure accumulation stage, the collected pulse signals of the flowmeter are filtered, and a value t of the current maximum pulse period Tmax is obtained, and the value t is first compared with H1. Assuming that the Tmax is equal to 50 in the first cycle, and therefore, the Tmax is less than H1, the Tmax is less than H2 and the Tmax is less than H3. At this time, a number of cycles is increased by 1, and the above steps are repeated until the determined maximum pulse period reaches 100.

When the maximum pulse period is greater than 100, taking the maximum pulse period being equal to 105 as an example, the Tmax is less than H1 and H2, respectively, but the Tmax is greater than H3 and is greater than the Hmax, and therefore, the value of the third parameter P3 is increased by 1, at this time, the value of the P3 is equal to 1. The P3 is less than the C3, at this time, the number of cycles is increased by 1, and the above steps are repeated. In a process of repeating the above steps, the obtained maximum pulse period may be equal to 100, however, since the maximum pulse period that has been obtained previously is equal to 105, the value 105 of the maximum pulse period is continuously used to perform a judgment logic.

The pulse signals of the flowmeter are continuously collected, when the maximum pulse period is greater than 110, taking the maximum pulse period being equal to 115 as an example, the Tmax is less than H1, but the Tmax is greater than H2 and H3, respectively, and the Tmax is greater than the Hmax, and therefore, the value of the second parameter P2 is increased by 1, at this time, the value of the P2 is equal to 1. On the basis of the value of the P3 being equal to 1, a number of collecting times in the process where the maximum pulse period is within the range from 105 to 115 is additionally increased, for example, the pulse signal of the flowmeter is collected twice during the process where the maximum pulse period is within the range from 105 to 115, and therefore, the value of the P3 is increased by 2, at this time, the value of the P3 is equal to 3.

The pulse signals of the flowmeter are continuously collected, when the maximum pulse period is greater than 120, taking the maximum pulse period being equal to 155 as an example, the Tmax is greater than the H1, the H2 and the H3, respectively, and the Tmax is greater than the Hmax, and therefore, the value of the first parameter P1 is increased by 1, at this time, the value of the P1 is equal to 1. On the basis of the value of the P2 being equal to 1 and the value of the P3 being equal to 3, a number of collecting times in the process where the maximum pulse period is within the range from 115 to 125 is additionally increased, for example, the pulse signal of the flowmeter is collected 12 times during the process where the maximum pulse period is within the range from 115 to 125, and therefore, the value of the P2 and the value of the P3 are increased by 12, at this time, the value of the P2 is equal to 13 and the value of the P3 is equal to 15. At this time, the value of the P2 is greater than 12, and therefore, the generation process of the target object is determined to enter the constant pressure stage. A number of the pulse signals in the constant pressure stage starts to be calculated, and since the generation process of the target object is determined to enter the constant pressure stage, the above judgment logic no longer repeats the next time. Instead, the number of the pulse signals is continuously increased until the required coffee cup volume is obtained, and then the water pump is turned off, and the iteration parameter Hmax is updated, where Hmax = (Tmax - 20)/10*10.

In the above process, the H3 is equal to 100, which is generally set to be relatively low, preventing some coffee machines from failing to find the constant pressure stage caused by the maximum pulse cycle value generated when the constant pressure stage is reached being less than 100 due to a relatively small pressure generated by process errors, i.e., preventing the inability to find the constant pressure stage due to the H3 being set too high, and further preventing the inability to calculate the coffee cup volume normally. Similarly, the H1 is equal to 120, which is generally set to be relatively high, to prevent some coffee machines from failing to reach the constant pressure stage even after the above parameter adjustment is performed in a case that the maximum pulse period value is greater than the preset value, due to a relatively large pressure generated by the process errors, i.e., judging to enter the constant pressure stage in advance, but this time is still the pressure accumulation stage, preventing the inability to obtain the accurate cup volume parameter, and further preventing the inability to accurately calculate the coffee cup volume.

Therefore, the H3 is set to be equal to 100, the H2 is set to be equal to 110, and the H1 is set to be equal to 120, so that three gears are set to cover various pressure conditions of the coffee machine as much as possible, which is helpful to detect the maximum pulse period in the constant pressure stage and relatively accurately judge to enter the constant pressure stage. In addition, the maximum pulse period Tmax is first compared with the H1, then is compared with the H2, and finally is compared with the H3, so as to reduce an amount of calculation. When the Tmax is greater than the H1, the Tmax must be greater than the H2 and greater than the H3. In addition, when the obtained maximum pulse period Tmax reaches the H1 or the H2 or the H3, it is not directly judged to enter the constant pressure stage, but continues to obtain the subsequent pulse signals of the flowmeter according to the parameter C1, C2 or C3. When the maximum pulse period Tmax is obtained, it is possible that the pressure may increase slightly before it is determined to enter the constant pressure stage, or it is also possible that the pressure may decrease and stabilize before it is determined to enter the constant pressure stage. Therefore, the subsequent pulse signals are obtained to better ensure that a making process of coffee enters the constant pressure stage. Finally, setting the value of the Hmax is to reduce the judgment logic, for example, after the coffee is made, the value of the Hmax is updated to be equal to 110, and when the maximum pulse period is detected to be equal to 115, only the first two judgment logics (i.e., judging whether the Tmax is greater than the H1, and judging whether the Tmax is greater than the H2) need to be judged, the third judgment logic (i.e., judging whether the Tmax is greater than the H3) may be omitted, and at this time, the current pressure is closer to the actual maximum pressure of the coffee machine, i.e., the current stage is closer to the constant pressure stage, making the calculated coffee cup volume relatively accurate.

Below is a specific example of making coffee to illustrate.

Firstly, the cup volume parameter is obtained. Here, a value of the cup volume parameter is 0.350g/pulse, and a unit of the cup volume parameter means that an amount of water flowed per each time of generating one pulse signal of the flowmeter. A target coffee cup volume made based on the cup volume parameter is 40g, and therefore, a number of pulse signals of the flowmeter that need to be collected in the constant pressure stage is: 40g/0.350g = 114.28, which is taken as 115.

Next, the pulse signals of the flowmeter are collected, it is determined that the current stage is the pressure accumulation stage according to the pulse signal period, and after the pulse signals of the flowmeter are filtered, the Tmax is obtained, which is equal to 50, and therefore, the Tmax is less than the H1, the H2 and the H3, respectively, and then the number of cycles increases automatically, the second cycle is entered. In the second cycle, the current stage is still the pressure accumulation stage, the Tmax is equal to 60, and therefore, the Tmax is less than the H1, the H2 and the H3, respectively, and then the number of cycles increases automatically, the third cycle is entered. In the third, fourth, and fifth cycles, the current stage is still the pressure accumulation stage, the Tmax are equal to 70, 80, and 90, respectively, and therefore, the Tmax is less than the H1, the H2 and the H3, respectively, and then the number of cycles increases automatically, the sixth cycle is entered.

In the sixth cycle, the current stage is still the pressure accumulation stage, the value of the Tmax is equal to 105, and therefore, the Tmax is less than the H1 and the H2, respectively, and the Tmax is greater than H3 and is greater than the Hmax, the value of the P3 is increased to 1, and since the P3 is less than the C3, the number of cycles increases automatically, and the seventh cycle is entered.

In the seventh cycle, the current stage is still the pressure accumulation stage, and the value of the Tmax is equal to 105, and therefore, the Tmax is less than H1 and H2, respectively, the Tmax is greater than the H3 and is greater than the Hmax, the value of the P3 is increased to 2, and since the P3 is less than the C3, the number of cycles increases automatically, and the eighth cycle is entered. In the eighth cycle, the current stage is still the pressure accumulation stage, and the value of the Tmax is equal to 115, and therefore, the Tmax is less than the H1, the Tmax is greater than the H2, the Tmax is greater than the H3 and is greater than the Hmax, the value of the P2 is increased to 1, the value of the P3 is increased to 3, and since the P2 is less than the C2, and the P3 is less than the C3, the number of cycles increases automatically, and the ninth cycle is entered.

In the ninth, tenth, eleventh, twelfth and thirteenth cycles, the current stage is still the pressure accumulation stage, and the value of the Tmax is equal to 115, 100, 105, 110 and 105, respectively, all of which do not exceed 115, and therefore, in these five cycles, the value of the Tmax is taken as 115, the Tmax is less than the H1, the Tmax is greater than H2, the Tmax is greater than the H3 and is greater than the Hmax, the value of the P2 is increased to 6, the value of the P3 is increased to 8, and since the P2 is less than the C2, and the P3 is less than the C3, the number of cycles increases automatically, and the fourteenth cycle is entered.

In the fourteenth cycle, the current stage is still the pressure accumulation stage, and the value of the Tmax is equal to 125, and therefore, the Tmax is greater than the H1, the Tmax is greater than H2, the Tmax is greater than the H3 and is greater than the Hmax, the value of the P1 is increased to 1, the value of the P2 is increased to 7, the value of the P3 is increased to 9, and since the P1 is less than the C1, the P2 is less than the C2, and the P3 is less than the C3, the number of cycles increases automatically, and the fifteenth cycle is entered.

In the fifteenth, sixteenth, seventeenth, eighteenth, and nineteenth cycles, the current stage is still the pressure accumulation stage, and the value of the Tmax is equal to 120, 121, 111, 122, 120, respectively, all of which do not exceed 125, and therefore, in these five cycles, the value of the Tmax is taken as 125, the Tmax is greater than the H1, the Tmax is greater than H2, the Tmax is greater than the H3 and is greater than the Hmax, the value of the P1 is increased to 6, the value of the P2 is increased to 12, the value of the P3 is increased to 14, and since the P2 is equal to the C2, it is determined to enter the constant pressure stage, and then the number of the pulse signals in the constant pressure stage is recorded, the 20th cycle to the 135th cycle are entered.

From the 20th cycle to the 135th cycle, the current stage is the constant pressure stage, the number of the pulse signals increases automatically, thus the number of the pulse signals is equal to 115, and then the water pump is turned off, the Hmax is updated, where Hmax = (Tmax - 20)/10*10 = (125 - 20)/10*10 = 105.

### Exemplary Beverage Machine, Electronic apparatus

Based on the same inventive concept, an embodiment of the present application provides a beverage machine, including a water supply system, a flowmeter, a brewing system and a control module. The brewing system is configured to: gradually pressurize a brewing object until it is determined to enter a constant pressure stage and form a beverage.

The control module is configured to: judge whether a generation process of the beverage enters the constant pressure stage; obtain a cup volume parameter corresponding to the beverage when the generation process of the beverage enters the constant pressure stage, and the cup volume parameter representing a cup volume corresponding to one pulse signal of the flowmeter; and determine, based on the cup volume parameter, a cup volume of the beverage.

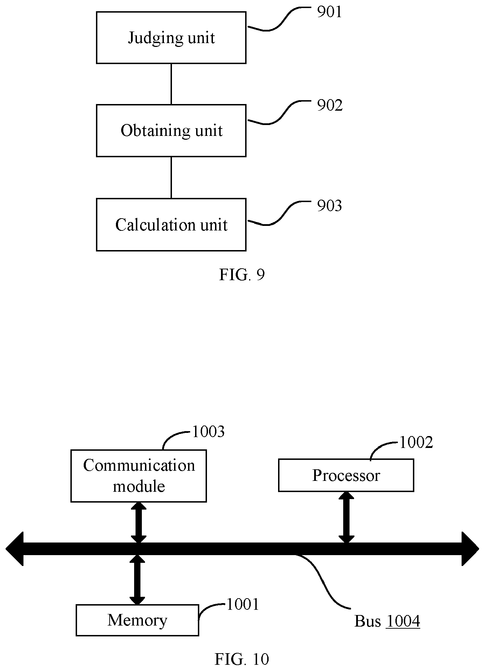

In a possible embodiment, as shown in FIG. 9, the control module includes a judging unit 901, an obtaining unit 902 and a calculation unit 903.

The judging unit 901 is configured to: judge whether the generation process of the beverage enters the constant pressure stage based on a pulse signal of the flowmeter corresponding to the generation process.

The obtaining unit 902 is configured to: obtain the cup volume parameter in the constant pressure stage and pulse signals of the flowmeter.

The calculation unit 903 is configured to: determine, based on the cup volume parameter, the cup volume of the beverage.

In a possible embodiment, the calculation unit 903 is further configured to:
calculate a ratio of an actual cup volume of the beverage to a target cup volume generated in the constant pressure stage; and
multiply the ratio by a preset parameter to obtain the cup volume parameter, and the preset parameter representing a cup volume corresponding to one pulse signal of the flowmeter.

In a possible embodiment, the control module further includes a storage unit, and the storage unit is configured to store the cup volume parameter in the constant pressure stage; the calculation unit 903 is configured to calculate, based on the cup volume parameter and the target cup volume generated in the constant pressure stage, a number of pulse signals of the flowmeter required for the constant pressure stage; and multiply the cup volume parameter by the number of the pulse signals to obtain the cup volume of the beverage after the pulse signals of the flowmeter required for the constant pressure stage are obtained.

In the specific implementation, the above modules and units may be implemented as an independent entity, or may be combined arbitrarily to be implemented as a same entity or multiple entities, the specific implementation of the above modules and units may be seen in the foregoing method embodiments, and the specific beneficial effects that may be achieved by the above modules and units may also be seen the beneficial effects in the foregoing method embodiments, and details are not described herein again.

A person skilled in the art may understand that various aspects of the present application may be implemented as a system, a method or a program product. Therefore, various aspects of the present application may be specifically implemented in the following forms: an entire hardware embodiment, an entire software embodiment (including firmware, or microcode, etc.), or an embodiment combining hardware and software, which may be collectively referred to herein as a "circuit", a "module", or a "system".

In some possible embodiments, a beverage machine according to the present application may at least include a processor and a memory. A program code is stored on the memory, and when the program code is executed by the processor, the processor performs steps of a method for determining a cup volume according to various exemplary embodiments of the present application, described in this specification. For example, the processor may perform the steps shown in any one of FIG. 3 to FIG. 7.

Based on a same inventive concept as the foregoing method embodiments, an embodiment of the present application further provides an electronic apparatus. In an embodiment, the electronic apparatus may be a server. In this embodiment, a structure of the electronic apparatus may be shown in FIG. 10, including a memory 1001, a communication module 1003 and one or more processors 1002.

The memory 1001 is configured to: store a computer program executed by the processor 1002. The memory 1001 may mainly include a storage program area and a storage data area, and the storage program area may store an operating system and a program required for running an instant messaging function, etc.; and the storage data area may store various instant messaging information and an operation instruction set, etc.

The memory 1001 may be a volatile memory, such as a random-access memory (RAM); the memory 1001 may also be a non-volatile memory, such as a read-only memory, a flash memory, a hard disk drive (HDD) or a solid-state drive (SSD); or the memory 1001 may be any other medium that may be used to carry or store a desired program code which has instructions or data structures and can be accessed by a computer, which is not limited thereto. The memory 1001 may be a combination of the above memories.

The processor 1002 may include one or more central processing units (CPUs), or a digital processing unit, etc. The processor 1002 is configured to invoke the computer program stored on the memory 1001 to implement the method for determining the cup volume.

The communication module 1003 is configured to communicate with a terminal device and other servers.

A specific connection medium between the memory 1001, the communication module 1003 and the processor 1002 is not limited in the embodiments of the present application. In the embodiments of the present application shown in FIG. 10, the memory 1001 and the processor 1002 are connected by a bus 1004, the bus 1004 is described by using a bold line in FIG. 10, and a connection manner between other components is merely a schematic explanation, which is not limited thereto. The bus 1004 may be classified into an address bus, a data bus, and a control bus, etc. For ease of description, only one bold line is used for description in FIG. 10, but it is not described that there is only one bus or only one type of bus.

A computer storage medium is stored on the memory 1001, a computer executable instruction is stored on the computer storage medium, and the computer executable instruction is used for implementing the method for determining the cup volume in the embodiments of the present application. The processor 1002 is configured to perform the foregoing method for determining the cup volume, shown in any one of FIG. 3 to FIG. 7.

## Claims

1. A method for determining a cup volume, comprising:
judging whether a generation process of a target object enters a constant pressure stage;
when the generation process of the target object enters the constant pressure stage, obtaining a cup volume parameter corresponding to the target object, the cup volume parameter representing a cup volume corresponding to one pulse signal of a flowmeter in the constant pressure stage; and
determining, based on the cup volume parameter, a cup volume of the target object.

2. The method according to claim 1, wherein the obtaining a cup volume parameter corresponding to the target object comprises:
calculating a ratio of an actual cup volume of the target object to a target cup volume generated in the constant pressure stage; and
multiplying the ratio by a preset parameter to obtain the cup volume parameter, the preset parameter representing a cup volume corresponding to one pulse signal of the flowmeter.

3. The method according to claim 1, wherein the judging whether a generation process of a target object enters a constant pressure stage comprises:
obtaining a pulse signal of the flowmeter corresponding to the generation process; and
judging whether the generation process of the target object enters the constant pressure stage based on the pulse signal of the flowmeter.

4. The method according to claim 3, wherein the judging whether the generation process of the target object enters the constant pressure stage based on the pulse signal of the flowmeter comprises:
determining a current pulse signal period corresponding to the pulse signal of the flowmeter; and
when the current pulse signal period satisfies a preset condition, determining that the generation process of the target object enters the constant pressure stage.

5. The method according to claim 4, wherein when the current pulse signal period satisfies the preset condition, the determining that the generation process of the target object enters the constant pressure stage comprises:
determining a maximum pulse period based on a size relationship between the current pulse signal period and a previous pulse signal period, when the current pulse signal period is greater than the previous pulse signal period, determining the current pulse signal period as the maximum pulse period, when the current pulse signal period is less than the previous pulse signal period, determining the previous pulse signal period as the maximum pulse period, the previous pulse signal period being a maximum pulse period determined based on a pulse signal of the flowmeter obtained previously; and
determining that the generation process of the target object enters the constant pressure stage based on the maximum pulse period.

6. The method according to claim 5, wherein the determining that the generation process of the target object enters the constant pressure stage based on the maximum pulse period comprises:
when the maximum pulse period is greater than a preset period, adjusting at least one parameter; and
when one of at least one adjusted parameter is greater than or equal to a preset threshold set for a corresponding parameter, determining that the generation process of the target object enters the constant pressure stage.

7. The method according to claim 5, wherein the determining that the generation process of the target object enters the constant pressure stage based on the maximum pulse period comprises:
when the maximum pulse period is greater than a first preset value, adjusting a first parameter, a second parameter and a third parameter, the first parameter, the second parameter and the third parameter representing a cumulative number of pulse signals obtained currently; and
when an adjusted first parameter is greater than or equal to a first threshold, or an adjusted second parameter is greater than or equal to a second threshold, or an adjusted third parameter is greater than or equal to a third threshold, determining that the generation process of the target object enters the constant pressure stage.

8. The method according to claim 7, wherein the determining that the generation process of the target object enters the constant pressure stage based on the maximum pulse period comprises:
when the maximum pulse period is less than or equal to the first preset value, judging whether the maximum pulse period is greater than a second preset value, the second preset value being less than the first preset value;
when the maximum pulse period is greater than the second preset value, adjusting the second parameter and the third parameter; and
when the first parameter is greater than or equal to the first threshold, or an adjusted second parameter is greater than or equal to the second threshold, or an adjusted third parameter is greater than or equal to the third threshold, determining that the generation process of the target object enters the constant pressure stage.

9. The method according to claim 8, wherein the determining that the generation process of the target object enters the constant pressure stage based on the maximum pulse period comprises:
when the maximum pulse period is less than or equal to the second preset value, judging whether the maximum pulse period is greater than a third preset value, the third preset value being less than the second preset value;
when the maximum pulse period is greater than the third preset value, adjusting the third parameter; and
when the first parameter is greater than or equal to the first threshold, or the second parameter is greater than or equal to the second threshold, or an adjusted third parameter is greater than or equal to the third threshold, determining that the generation process of the target object enters the constant pressure stage.

10. The method according to claim 9, wherein when the maximum pulse period is greater than the second preset value, the adjusting the second parameter and the third parameter comprises: when the maximum pulse period is greater than the second preset value and is greater than an iteration parameter, adjusting the second parameter and the third parameter; and when the maximum pulse period is greater than the third preset value, the adjusting the third parameter comprises: when the maximum pulse period is greater than the third preset value and is greater than the iteration parameter, adjusting the third parameter.

11. The method according to claim 10, further comprising:
updating the iteration parameter based on the maximum pulse period.

12. The method according to any one of claims 1 to 11, wherein the determining, based on the cup volume parameter, a cup volume of the target object comprises:
collecting statistics on a number of pulse signals of the flowmeter in the constant pressure stage; and
multiplying the cup volume parameter by the number of the pulse signals to obtain the cup volume of the target object.

13. A beverage machine, comprising a water supply system, a flowmeter, a brewing system and a control module;
wherein the brewing system is configured to gradually pressurize a brewing object until it is determined to enter a constant pressure stage and form a beverage; and
the control module is configured to judge whether a generation process of the beverage enters the constant pressure stage; and obtain a cup volume parameter when the generation process of the beverage enters the constant pressure stage, the cup volume parameter representing a cup volume corresponding to one pulse signal of the flowmeter in the constant pressure stage; and determine, based on the cup volume parameter, a cup volume of the beverage.

14. The beverage machine according to claim 13, wherein the control module comprises a judging unit, an obtaining unit and a calculation unit, and
the judging unit is configured to judge whether the generation process of the beverage enters the constant pressure stage based on a pulse signal of the flowmeter corresponding to the generation process;
the obtaining unit is configured to obtain the cup volume parameter in the constant pressure stage and pulse signals of the flowmeter;
the calculation unit is configured to determine, based on the cup volume parameter, the cup volume of the beverage; and
the calculation unit is further configured to:
calculate a ratio of an actual cup volume of the beverage to a target cup volume generated in the constant pressure stage; and
multiply the ratio by a preset parameter to obtain the cup volume parameter, the preset parameter representing a cup volume corresponding to one pulse signal of the flowmeter.

15. The beverage machine according to claim 14, wherein the control module further comprises a storage unit, and the storage unit is configured to store the cup volume parameter in the constant pressure stage; the calculation unit is configured to calculate, based on the cup volume parameter and the target cup volume generated in the constant pressure stage, a number of pulse signals of the flowmeter required for the constant pressure stage; and multiply the cup volume parameter by the number of the pulse signals to obtain the cup volume of the beverage, after the pulse signals of the flowmeter required for the constant pressure stage are obtained.
